# EUROPÄISCHE PATENTANMELDUNG

(11) **EP 1 739 603 A1**
(43) Veröffentlichungstag der Anmeldung: **03.01.2007**
(21) Anmeldenummer: 05013864.3
(22) Anmeldetag: 28.06.2005
(51) Int. Cl.: G06Q 10/00

(54) **Client-Server-System, Server und Verfahren zur Ausgabe mindestens einer Information zu einem Online-Shop oder zu einem von dem Online-Shop angebotenen Produkt auf einer Netzwerkseite**

(71) Anmelder: HURRA Communications GmbH, 70599 Stuttgart (DE)
(72) Erfinder: Schweier, René, 70599 Stuttgart (DE)
(74) Vertreter: Dreiss, Fuhlendorf, Steimle & Becker

(57) **Zusammenfassung**

Die Erfindung betrifft ein Verfahren und ein Client-Server-System zur Ausgabe mindestens einer Information zu einem Online-Shop (4') oder zu einem von dem Online-Shop (4') angebotenen Produkt auf einer von einem Client (2) angeforderten, wobei an ein Kommunikationsnetzwerk (1) der Client (2), ein erster Server (4), der dem Online-Shop (4') zugeordnet ist, ein zweiter Server (5), der einem Werbepartner (5') zugeordnet ist, und ein dritter Server (6) angeschlossen ist, auf dem eine die mindestens eine Information umfassende Menge von Informationen zu dem Online-Shop (4') oder zu einem von dem Online-Shop (4') angebotenen Produkt abgelegt ist. Der Client (2) fordert die dem Werbepartner (5') zugeordnete Netzwerkseite über das Kommunikationsnetzwerk (1) an. Um eine sinnlose Darstellung der Information auf der angeforderten Netzwerkseite zu vermeiden, wird vorgeschlagen, dass
- vor der Ausgabe der mindestens einen Information auf der von dem Client (2) angeforderten Netzwerkseite der Zustand des ersten Servers (4) und/oder des Online-Shops (4') ermittelt wird,
- entschieden wird, ob in Abhängigkeit von dem ermittelten Zustand des ersten Servers (4) und/oder des Online-Shops (4') die mindestens eine Information aus der Menge der Informationen auf der angeforderten Netzwerkseite ausgegeben wird oder nicht, und
- in Abhängigkeit von dem Ergebnis der Entscheidung die mindestens eine Information aus der Menge der Informationen auf der angeforderten Netzwerkseite ausgegeben wird.

## Beschreibung

Die vorliegende Erfindung betrifft ein Client-Server-System umfassend:
- ein Kommunikationsnetzwerk,
- einen an das Kommunikationsnetzwerk angeschlossenen Client,
- einen an das Kommunikationsnetzwerk angeschlossenen ersten Server, der einem Online-Shop zugeordnet ist,
- einen an das Kommunikationsnetzwerk angeschlossenen zweiten Server, der einem Werbepartner zugeordnet ist,
- einen an das Kommunikationsnetzwerk angeschlossenen dritten Server, auf dem eine mindestens eine Information umfassende Menge von Informationen abgelegt ist, die dem Online-Shop und/oder einem von dem Online-Shop angebotenen Produkt zugeordnet sind,
- wobei der Client Mittel zum Anfordern einer dem Werbepartner zugeordneten Netzwerkseite über das Kommunikationsnetzwerk aufweist.

Außerdem umfasst die Erfindung ein Verfahren zur Ausgabe mindestens einer Information zu einem Online-Shop oder zu einem von dem Online-Shop angebotenen Produkt auf einer von einem Client angeforderten, einem Werbepartner zugeordneten Netzwerkseite, wobei
- der Client an ein Kommunikationsnetzwerk angeschlossen ist,
- an das Kommunikationsnetzwerk ein erster Server angeschlossen ist, der dem Online-Shop zugeordnet ist,
- an das Kommunikationsnetzwerk ein zweiter Server angeschlossen ist, der dem Werbepartner zugeordnet ist,
- an das Kommunikationsnetzwerk ein dritter Server angeschlossen ist, auf dem eine die mindestens eine Information umfassende Menge von Informationen zu dem Online-Shop oder zu einem von dem Online-Shop angebotenen Produkt abgelegt sind, und
- der Client die dem Werbepartner zugeordnete Netzwerkseite über das Kommunikationsnetzwerk anfordert.

Schließlich betrifft die vorliegende Erfindung auch einen Server zum Einsatz in einem Client-Server-System der oben genannten Art. Insbesondere handelt es sich dabei um einen Server eines Client-Server-Systems zur Ausgabe mindestens einer Information betreffend einen Online-Shop oder ein von dem Online-Shop angebotenes Produkt auf einer einem Werbepartner zugeordneten und von einem Client angeforderten Netzwerkseite.

Ein Online-Shop wird von einem Anbieter von Produkten (Waren oder Dienstleistungen) betrieben. Dabei umfasst der Online-Shop typischerweise einen Server in einem Kommunikationsnetzwerk, beispielsweise dem Internet. Dem Online-Shop sind Netzwerkseiten zugeordnet, die von einem ebenfalls mit dem Kommunikationsnetzwerk verbundenen Client angefordert werden können. Diese Netzwerkseiten werden auch als web-pages bezeichnet und enthalten Informationen bezüglich der angebotenen Produkte, beispielsweise Verkaufspreis und technische Details. Ein Benutzer des Online-Shops, also ein potenzieller Kunde, kann ein von dem Online-Shop angebotenes Produkt dadurch kaufen, dass er mittels des Client eine das Produkt beschreibende Netzwerkseite von dem Online-Shop anfordert, das Produkt auswählt und einen Bestellvorgang bezüglich des ausgewählten Produkts einleitet, um das Produkt zu kaufen.

Unter einem Online-Shop soll insbesondere auch ein Anbieter von Informationen verstanden werden. In diesem Fall sind die Informationen die Produkte des Online-Shops. Die Bestellung eines Produkts kann also auch die Anforderung von Informationen sein. Derartige Informationen sind beispielsweise Nachrichten, Börsenberichte, Bilder und Musikdateien.

Auch der Zugang zu Informationen an sich kann als Produkt eines Online-Shops angesehen werden. Beispielsweise kann von dem Online-Shop ein Zugang zu einem geschützten Bereich angeboten werden. Ein Benutzer bestellt dieses Produkt beispielsweise dadurch, dass er sich bei dem Online-Shop registriert. Der geschützte Bereich kann Informationen beinhalten, die nur den registrierten Benutzern zur Verfügung stehen. Die Bestellung eines Produkts geht damit in dem hier verwendeten Bedeutungsinhalt über das hinaus, was üblicherweise beispielsweise unter dem Kauf eines Produkts verstanden wird. Insbesondere ist die Bestellung eines Produkts nicht notwendigerweise an die Bezahlung eines Kaufpreises gebunden.

Die von dem Online-Shop an den Client übermittelbaren Netzwerkseiten sind üblicherweise in einem dem Online-Shop zugeordneten Speicherbereich abgespeichert oder werden dynamisch in Abhängigkeit der Anforderung durch den Benutzer erzeugt.

Bei einem Bestellvorgang werden benutzerspezifische Daten von dem Client an den Server übermittelt, die beispielsweise eine Adresse und eine Bankverbindung des Benutzers beschreiben. Mittels dieser Daten veranlasst der Online-Shop den Anbieter der Produkte ein Versenden der ausgewählten Produkte an den Benutzer und beispielsweise eine Abbuchung des entsprechenden Kaufpreises von einem Bankkonto des Benutzers.

Zur Beschreibung des Inhalts einer Netzwerkseite wird eine sogenannte Seitenbeschreibungssprache verwendet. Heutzutage wird dazu überwiegend die standardisierte Seitenbeschreibungssprache HTML (Hypertext Mark up Language) eingesetzt. HTML erlaubt es, den Inhalt und das Aussehen einer Netzwerkseite in Form eines sogenannten HTML-Dokuments zu beschreiben. Stellt beispielsweise der Benutzer mittels des Client eine Anfrage an den Online-Shop, so übermittelt der Online-Shop ein die angeforderten Informationen, also beispielsweise Beschreibungen, Verkaufspreis und eine Ansicht eines Produkts, enthaltendes HTML-Dokument an den Client. Sollen die dem Client mittels des HTML-Dokuments übermittelten Informationen einem Benutzer dargestellt werden, so wird die Netzwerkseite beziehungsweise das HTML-Dokument einem sogenannten Browser zugeführt. Als Browser bezeichnet man ein Computerprogramm, das in der Lage ist, HTML-Dokumente zu interpretieren und mittels einer geeigneten grafischen Oberfläche auf einem Datensichtgerät, beispielsweise einem Computerdisplay, darzustellen.

Um potentielle Kunden auf den Online-Shop oder auf von dem Online-Shop angebotene Produkte aufmerksam zu machen, sind dem Online-Shop sogenannte Werbepartner zugeordnet. Ein Werbepartner ist der Betreiber eines Servers, der Netzwerkseiten zur Verfügung stellt, die einen sogenannten Link zu dem Online-Shop aufweisen. Im folgenden wird dieser Server selbst als Werbepartner bezeichnet. Ein derartiger Link kann durch einen Benutzer aktiviert werden. Dies bewirkt, dass der dem Benutzer zugeordnete Client automatisch veranlasst wird, von dem Online-Shop eine Netzwerkseite anzufordern. Die so angeforderte Netzwerkseite kann beispielsweise die Hauptseite, die sogenannte home-page, des Online-Shops oder eine von dem Online-Shop bereitgestellte oder dynamisch erzeugte Netzwerkseite sein, die beispielsweise eine Beschreibung eines Produkts aufweist.

Ein derartiger Link wird häufig mittels eines sogenannten Werbebanners auf der Netzwerkseite des Werbepartners dargestellt. Aktiviert der Benutzer dieses Werbebanner, so wird durch den dem Benutzer zugeordneten Client eine Netzwerkseite des Online-Shops angefordert.

Der Werbepartner kann beispielsweise auch als eine sogenannte Suchmaschine ausgebildet sein. Eine Suchmaschine ist ein mit dem Kommunikationsnetzwerk verbundener Server, an den der Benutzer mittels des Client eine Anfrage in Form eines Suchbegriffes (sog. Keyword) sendet. Die Suchmaschine ermittelt anhand vorgebbarer Regeln in Abhängigkeit von dem übermittelten Suchbegriff Informationen, die mit dem Suchbegriff assoziiert werden. Die Suchmaschine veranlasst, dass die so ermittelten Informationen (das Suchergebnis) mittels einer Netzwerkseite an den Client übermittelt werden. Dazu wird häufig in Abhängigkeit von den ermittelten Informationen automatisiert ein HTML-Dokument durch den Server erzeugt wird, das schließlich an den Client übermittelt und dem Benutzer mittels des Browsers angezeigt wird. Häufig werden auf den von den Suchmaschinen in Abhängigkeit einer Anforderung von Informationen erzeugten Netzwerkseiten auch Werbebanner dargestellt, wobei die Werbebanner ihrerseits wiederum von Servern spezieller Dienstleister über das Internet zur Verfügung gestellt werden können.

Kauft der Benutzer bei dem Online-Shop ein Produkt, so erhält der Werbepartner in der Regel eine Vergütung, da der Benutzer durch den Werbepartner auf den Online-Shop aufmerksam gemacht wurde. Die Höhe der Vergütung kann beispielsweise prozentual vom Gewinn oder vom Kaufpreis des Produkts abhängen. Die Vergütung kann aber auch einem festen Geldbetrag entsprechen.

Es ist auch möglich, dass der Benutzer von dem Online-Shop eine Netzwerkseite angefordert hat und zu einem späteren Zeitpunkt ein Produkt kauft, ohne über einen auf einer Netzwerkseite des Werbepartners dargestellten Link auf den Online-Shop aufmerksam gemacht worden zu sein.

In diesem Fall steht dem Werbepartner keine Vergütung für die erfolgte Bestellung zu. Um zu ermitteln, ob der Benutzer durch den Werbepartner zu dem Online-Shop geführt wurde, ist es denkbar, dass der Werbepartner dem Client des Benutzers bei der Aktivierung des Links, mittels dessen der Client eine Netzwerkseite des Online-Shops anfordert, Daten (bspw. in Form eines sogenannten Cookies) übermittelt und den Client veranlasst, diese Daten auf einem dem Client zugeordneten Speicherbereich abzuspeichern. Diese Daten können beispielsweise eine Identifikation des Werbepartners beinhalten. Auf Anforderung kann der Client die abgespeicherten Daten an den Anfordernden übermitteln. Ist der Anfordernde der Online-Shop, so kann er erkennen, ob dem Werbepartner eine Vergütung zusteht, indem er prüft, ob die Daten eine Identifikation des Werbepartners beinhalten, bzw. ob überhaupt abgespeicherte Daten bei dem Client vorliegen.

Dieses Verfahren bedeutet jedoch, dass ein Server (hier: der Online-Shop) von einem Client (hier: der dem Benutzer zugeordnete Client) Daten anfordern kann, die von einem anderen Server (hier: der Werbepartner) an den Client übermittelt wurden. Eine solche Vorgehensweise ist aus Sicherheitsgründen (beispielsweise aus Datenschutzgründen) nicht wünschenswert, da bei diesem Verfahren nur schwer zu verhindern ist, dass ein Server nicht auch andere Daten von dem Client anfordert.

Um dieses Problem zu umgehen, wird üblicherweise ein sogenanntes Cookie eingesetzt. Fordert der Benutzer mittels des Client von dem Werbepartner eine Netzwerkseite an, so veranlasst der Werbepartner, dass neben der Netzwerkseite zusätzliche Informationen an den Client übermittelt werden und diese Informationen in einem dem Client zugeordneten Speicherbereich abgespeichert werden. Die so abgespeicherten Informationen werden als Cookie bezeichnet. Man spricht hier auch vom "Setzen eines Cookies". Ein Cookie kann auch gesetzt werden, wenn der Client einen auf einer Netzwerkseite dargestellten Link aktiviert. Fordert der Client erneut eine Netzwerkseite von dem Werbepartner an, so kann das Cookie zusammen mit der Anforderung von dem Client an den Werbepartner übermittelt werden. Ein Cookie ist üblicherweise derart realisiert, dass es nur an den Werbepartner zurückgeschickt werden kann, der den Client zum Setzen des Cookies veranlasst hat.

Ein Cookie weist üblicherweise eine vorgebbare "Lebensdauer" (sogenannte Laufzeit) auf, die eine Zeitdauer beschreibt, während der das Cookie existieren soll. Nach Ablauf der Laufzeit wird das Cookie automatisch von dem Client gelöscht. Eine derartige Laufzeit eines Cookies beträgt beispielsweise 30 Tage.

Einem Cookie kann auch eine sogenannte Vertraulichkeitsstufe zugeordnet sein. Die Vertraulichkeitsstufe eines Cookies wird beispielsweise in Abhängigkeit der Art der in dem Cookie abgespeicherten Daten bestimmt. Je vertraulicher diese Daten sind, desto größer sollte die Vertraulichkeitsstufe sein. Ein Browser wiederum kann die Möglichkeit vorsehen, nur Cookies bestimmter Vertraulichkeitsstufen zu setzen bzw. nur Cookies bestimmter Vertraulichkeitsstufen an einen ein bei dem Client gesetztes Cookie anfordernden Server zu senden.

Der Werbepartner erhält für die Darstellung der Information auf der vom Client angeforderten Netzwerkseite eine Vergütung. Die Vergütung richtet sich üblicherweise nach der Anzahl der Aktivierungen des Links (sogenannte Clicks). Typischerweise sind einem Online-Shop mehrere Werbepartner zugeordnet. Somit ist es sinnvoll, um Mehrfachvergütungen zu vermeiden, bei einer durchgeführten Bestellung eines Produkts bei dem Online-Shop denjenige Werbepartner zu ermitteln, über dessen Link der Benutzer zu dem Online-Shop geführt wurde. Zu diesem Zweck wird ein Tracking-System eingesetzt. Es ist heutzutage üblich, dass einer oder mehrere der dem Online-Shop zugeordneten Werbepartner einem sogenannten Tracking-System zugeordnet ist. Ein derartiges Tracking-System ist beispielsweise unter http://www.zanox.de oder unter http://www.affilinet.de erreichbar. Ein Tracking-System ermöglicht es einem Online-Shop einerseits, einen oder mehrere der dem Tracking-System zugeordneten Werbepartner auszuwählen. Andererseits kann ein Online-Shop dort Links und/oder Werbebanner hinterlegen, die dann von potentiellen, bei dem Tracking-System registrierten Werbepartnern auf deren Netzwerkseiten dargestellt werden können. Ein Tracking-System verwaltet damit beispielsweise die Werbepartner eines Online-Shops. Der Online-Shop selbst muss in diesem Fall nicht notwendigerweise Informationen über die Identität der Werbepartner selbst besitzen. Zweckmäßigerweise wird das Tracking-System den Online-Shop jedoch regelmäßig über die aktuell dem Online-Shop zugeordneten Werbepartner informieren. Ein entsprechendes Verfahren und Client-Server-System ist in der zum Anmeldetag der vorliegenden Anmeldung noch nicht veröffentlichten EP 05 007 273 beschrieben.

Häufig wird von einem ersten Server, beispielsweise von einem Online-Shop, ein zweiter Server, beispielsweise ein Werbepartner beauftragt, auf Netzwerkseiten, die von dem Werbepartner an einen diese Netzwerkseite anfordernden Client übermittelt werden, eine Information (bspw. einen Werbebanner und/oder einen Link) auf eine Netzwerkseite des Online-Shop darzustellen. Ein Werbebanner wirbt mittels einer textuellen und/oder grafischen Darstellung für den Online-Shop oder für ein über den Online-Shop zu beziehendes Produkt oder eine über den Online-Shop vermittelte Dienstleistung. Ist der Werbepartner als Suchmaschine ausgestaltet, so kann der Online-Shop den Werbepartner beauftragen, auf einer in Abhängigkeit eines von einem dem Client zugeordneten Benutzer eingegebenen Suchwortes erzeugten Netzwerkseite, einen Link auf eine dem Online-Shop zugeordnete Netzwerkseite darzustellen.

Typischerweise beauftragt ein Online-Shop mehrere Werbepartner damit, Links auf deren Netzwerkseiten darzustellen. Die Vergütung der Werbepartner erfolgt in Abhängigkeit von der Anzahl der Clicks auf den dargestellten Link.

Nach dem Stand der Technik werden die Informationen auf der von dem Client angeforderten Netzwerkseite des Werbepartners immer angezeigt, wenn bei dem Werbepartner bzw. bei dem Client definierte Bedingungen erfüllt sind, wenn also bspw. der Benutzer ein bestimmtes Suchwort in eine Suchmaschine eingibt, das vorab für die Darstellung der Information auf der Netzwerkseite der Suchmaschine gebucht wurde, oder wenn bspw. der Client als ein geeigneter Adressat der Information erkannt wurde. Dabei bleiben Bedingungen im Bereich des Online-Shops unberücksichtigt. Es wird bspw. nicht berücksichtigt, ob der Server des Online-Shops derzeit überhaupt erreichbar ist, d. h. online ist, ob eine dem Online-Shop bzw. dem beworbenen Produkt zugeordnete Netzwerkseite, zu der ein in der Information enthaltener Link hinführt, derzeit überhaupt erreichbar ist oder ob das beworbene Produkt in dem Online-Shop überhaupt zur Verfügung steht. Es kann also passieren, dass auf der von dem Client angeforderten Netzwerkseite eine Information mit einem Link dargestellt wird, die nach dem Aktivieren des Links für Verärgerung bei dem Benutzer führt, da der Link auf eine falsche Seite führt, einen Fehler verursacht oder ein beworbenes Produkt überhaupt nicht verfügbar ist und damit bei dem Online-Shop auch nicht bestellt werden kann. Durch die Aktivierung des Links erhält der Werbepartner zudem eine Vergütung, obwohl die dargestellte Information überhaupt nicht zu einer Bestellung bei dem Online-Shop führen kann.

Der vorliegenden Erfindung liegt deshalb die Aufgabe zugrunde, eine Möglichkeit zur Verfügung zu stellen, eine solche Verärgerung der Benutzer und eine solche sinnlose Vergütung der Werbepartner zu verhindern.

Zur Lösung dieser Aufgabe wird ausgehend von dem Client-Server-System der eingangs genannten Art vorgeschlagen, dass
- in dem Client-Server-System Prüfmittel vorgesehen sind, um vor der Ausgabe der Information auf der von dem Client angeforderten Netzwerkseite den Zustand des ersten Servers und/oder des Online-Shops zu ermitteln,
- in dem Client-Server-System Entscheidungsmittel vorgesehen sind, um zu entscheiden, ob in Abhängigkeit von dem ermittelten Zustand des ersten Servers und/oder des Online-Shops auf der von dem Client angeforderten Netzwerkseite mindestens eine Information aus der Menge der Informationen auszugeben ist oder nicht, und
- in dem Client-Server-System Ausgabemittel vorgesehen sind, um in Abhängigkeit von dem Ergebnis der Entscheidung die mindestens eine Information aus der Menge der Informationen auf der von dem Client angeforderten Netzwerkseite auszugeben.

Erfindungsgemäß wird also vorgeschlagen, bevor die Information auf der von dem Client angeforderten Netzwerkseite ausgegeben wird zu prüfen, ob es überhaupt Sinn macht, die Information auf der Netzwerkseite darzustellen. Dazu wird der Zustand des Online-Shops bzw. des dem Online-Shop zugeordneten Servers überprüft. Falls sich aufgrund dieser Überprüfung ergibt, dass eine Darstellung der Information auf der von dem Client angeforderten Netzwerkseite keinen Sinn macht, wird die Information gar nicht erst dargestellt. Ein dem Client zugeordneter Benutzer hat somit gar nicht die Möglichkeit einen in der dargestellten Information enthalten Link zu aktivieren. Eine Verärgerung des Benutzers und eine sinnlose Vergütung des Werbepartners kann so auf einfache Weise wirkungsvoll verhindert werden.

Außerdem kann der Datenverkehr über das Kommunikationsnetzwerk durch die vorliegende Erfindung deutlich reduziert werden, bzw. im Bereich der Werbebanner auf die sinnvollen Werbebanner beschränkt werden. Da die Nutzung des Internet an sich kostenlos ist, finanzieren sich immer mehr Betreiber von Netzwerkseiten über die kostenpflichtige Platzierung von Informationen auf ihren Netzwerkseiten. Heutzutage ist auf der überwiegenden Zahl der im Internet verfügbaren Netzwerkseiten mindestens ein Werbebanner, häufig mit einem darin enthaltenen Link, dargestellt. In der Praxis führt eine große Zahl dieser Links aufgrund von Unzulänglichkeiten auf Seiten des Online-Shops nicht zu der gewünschten Netzwerkseite bzw. nicht zur Bestellung des gewünschten Produkts. All diese unnötigen weil sinnlosen Informationen werden mit der vorliegenden Erfindung nun nicht mehr über das Kommunikationsnetzwerk übermittelt.

Gemäß einer vorteilhaften Weiterbildung der Erfindung wird vorgeschlagen, dass das Kommunikationsnetzwerk das Internet ist.

Der dritte Server, auf dem die die mindestens eine Information umfassende Menge von Informationen abgelegt ist, kann als ein separater Server ausgebildet sein, der an das Kommunikationsnetzwerk angeschlossen ist. Der Server bzw. der Inhalt der darauf abgelegten Informationen kann von einem Werbepartner oder von dem Online-Shop verwaltet werden. In einer bevorzugten Ausführungsform wird jedoch vorgeschlagen, dass der dritte Server einem Tracking-System zugeordnet ist. In diesem Fall würde der Betreiber des Tracking-Systems den Server bzw. den Inhalt der darauf abgelegten Informationen verwalten. Der dritte Server könnte auch identisch mit einem Server des Tracking-Systems sein.

Die Prüfmittel zum Ermitteln des Zustands des ersten Servers und/oder des daran angeschlossenen Online-Shops können in dem dritten Server oder in einem anderen an das Kommunikationsnetzwerk angeschlossenen Server angeordnet sein. Vorteilhafterweise sind die Prüfmittel jedoch in dem Tracking-System angeordnet. Ebenso können die Entscheidungsmittel zum Entscheiden ob die mindestens eine Information auf der angeforderten Netzwerkseite auszugeben ist oder nicht in dem dritten Server oder in einem anderen an das Kommunikationsnetzwerk angeschlossenen Server angeordnet sein. Vorteilhafterweise sind die Entscheidungsmittel jedoch in dem Tracking-System angeordnet. Ebenso können die Ausgabemittel zur Ausgabe der mindestens einen Information auf der angeforderten Netzwerkseite in dem dritten Server oder in einem anderen an das Kommunikationsnetzwerk angeschlossenen Server angeordnet sein. Vorteilhafterweise sind die Ausgabemittel jedoch in dem Tracking-System angeordnet.

Vorzugsweise umfasst die mindestens eine Information eine Werbung für den Online-Shop oder für das von dem Online-Shop angebotene Produkt. Weiter wird vorgeschlagen, dass die mindestens eine Information einen Verweis auf eine dem Online-Shop oder dem von dem Online-Shop angebotenen Produkt zugeordnete Netzwerkseite umfasst. Die auf der von dem Client angeforderten Netzwerkseite dargestellte Information kann als ein Werbebanner ausgebildet sein, auf dem ein Link zu einer dem Online-Shop oder einem von dem Online-Shop angebotenen Produkt zugeordneten Netzwerkseite enthalten ist.

Als eine weitere Lösung der Aufgabe der vorliegenden Erfindung wird ausgehend von dem Verfahren der eingangs genannten Art vorgeschlagen, dass
- vor der Ausgabe der mindestens einen Information auf der von dem Client angeforderten Netzwerkseite der Zustand des ersten Servers und/oder des Online-Shops ermittelt wird,
- entschieden wird, ob in Abhängigkeit von dem ermittelten Zustand des ersten Servers und/oder des Online-Shops die mindestens eine Information aus der Menge der Informationen auf der von dem Client angeforderten Netzwerkseite ausgegeben wird oder nicht, und
- in Abhängigkeit von dem Ergebnis der Entscheidung die mindestens eine Information aus der Menge der Informationen auf der von dem Client angeforderten Netzwerkseite ausgegeben wird.

Der Zustand des ersten Servers und/oder des Online-Shops kann bspw. anhand von sogenannten Ping-Befehlen überprüft werden. Dabei wird die grundsätzliche Verfügbarkeit eines Dienstes, bspw. eines Ports des dem Online-Shop zugeordneten ersten Servers, überprüft. Zusätzlich können weitere Kenngrößen des ersten Servers bzw. des Online-Shops überprüft werden, z.B. ob die Netzwerkseiten des Online-Shops bzw. des Produkts, zu denen ein in der Information enthaltener Link hinführt, tatsächlich wie gewünscht erreichbar sind, oder ob stattdessen Wartungsseiten ausgegeben werden oder das gewünschte Produkt in dem Online-Shop nicht verfügbar ist. Zu diesem Zweck kann ein oder können mehrere Merkmale des Online-Shops festgelegt oder ausgewählt werden, z.B. mehrere verschiedene Produkte bzw. Artikelnummern. Die Verfügbarkeit dieser Merkmale kann zum Überprüfen des Zustands des ersten Servers und/oder des Online-Shops herangezogen werden.

Ebenso ist es möglich, den Zustand des ersten Servers und/oder des Online-Shops mittels einer Plausibilitätsprüfung bestimmter Kenngrößen zu ermitteln. So ist es bspw. denkbar, dass man die generierten Clicks (Aktivierungen eines Links) und Leads (Registrierungen ohne greifbaren Umsatz) innerhalb einer vorgebbaren Zeit in ein Verhältnis zu den Sales (tatsächlich erfolgte Bestellungen) setzt. Dies kann bspw. mittels eines Tracking-Systems gemacht werden. Auf diese Weise kann ohne großen Aufwand erkannt werden, dass bei einer großen Anzahl von Clicks (z.B. 10.0000 generierten Clicks) und keinen Sales oder Leads umfangreiche Probleme bestehen müssen. Die Aussage, dass ein Problem vorliegen muss, reicht für die Realisierung der Erfindung völlig aus. Unerheblich für die Realisierung der Erfindung ist es, wo genau ein Problem aufgetreten ist bzw. welcher Art das Problem ist.

Des weiteren ist es mit der vorliegenden Erfindung möglich, Betrugsversuche bei dem Werbepartner, z.B. einen sogenannten Clickbetrug zu erkennen. Beim Clickbetrug wird über ein Script ein Link auf einer Netzwerkseite automatisch häufig mehrmals hintereinander angeclickt. Da bei jedem Click eine Vergütung des Werbepartners fällig wird, kann dem Online-Shop bzw. dem Tracking-System dadurch ein erheblicher Schaden entstehen. Clickbetrug kann mit der vorliegenden Erfindung dadurch verhindert werden, dass bspw. die sogenannte Conversion (Verhältnis Sales zu Clicks) beobachtet wird oder die absolute Anzahl an Clicks für bestimmte Suchworte beobachtet wird. Von einem Clickbetrug kann ausgegangen werden, wenn die Conversion stark einbricht, da die Anzahl der Clicks stark ansteigt, die Sales jedoch ausbleiben bzw. zu niedrig sind. Ebenso kann von einem Clickbetrug ausgegangen werden, wenn die Anzahl der Clicks für normalerweise weniger beachtete Suchworte innerhalb kurzer Zeit stark ansteigt.

Nachdem ein Problem des ersten Servers bzw. des Online-Shops festgestellt wurde, können die entsprechenden Entscheider (z.B. Werbepartner, Online-Shop, Betreiber des Tracking-Systems, etc.) bspw. mittels einer elektronischen Nachricht (eMail oder SMS) und die entsprechenden Werbeschaltungen bei den Werbepartnern automatisch abgeschaltet werden. Dies setzt eine geeignete Schnittstelle (z.B. API) von dem Server, auf dem das Verfahren abläuft, zu den Werbepartnern voraus. Falls zu dem einen oder anderen Werbepartner keine geeignete Schnittstelle besteht, wäre es denkbar, auch die Werbepartner mittels einer elektronischen Nachricht zu informieren und diese zu beauftragen, die Darstellung der entsprechenden Information auf der von den Clients angeforderten Netzwerkseiten in Zukunft zu unterbinden, das heißt bspw. die Werbeschaltung zu deaktivieren.

Darüber hinaus ist es denkbar, nach einem detektierten Problem des ersten Servers bzw. des Online-Shops erst nach Ablauf einer vorgebbaren Zeit (z.B. Countdown von x Minuten) entsprechende Maßnahmen einzuleiten. Die Verzögerung erlaubt es den Entscheidern nach dem Auftreten des Problems noch entsprechend reagieren zu können. Es wird vorgeschlagen, dass auch nach dem Detektieren eines Problems bei dem ersten Server bzw. dem Online-Shop auch weiterhin der Zustand des ersten Servers bzw. des Online-Shops überprüft wird. Sobald das Problem nicht mehr besteht, kann die Darstellung der entsprechenden Information auf der von den Clients angeforderten Netzwerkseiten wieder aufgenommen werden, d.h. die Werbeschaltung kann wieder aktiviert werden. Wiederum können die Entscheider entsprechend informiert werden. Auch eine Aktivierung der Werbeschaltung nach Ablauf einer vorgebbaren Zeitdauer (Verzögerung, Countdown) ist denkbar.

Gemäß einer vorteilhaften Weiterbildung der Erfindung wird vorgeschlagen, dass als die mindestens eine Information eine Werbung für den Online-Shop oder für das von dem Online-Shop angebotene Produkt ausgegeben wird. Vorteilhafterweise wird als die mindestens eine Information ein Verweis auf eine dem Online-Shop oder dem von dem Online-Shop angebotenen Produkt zugeordnete Netzwerkseite ausgegeben.

Gemäß einer bevorzugten Ausführungsform der vorliegenden Erfindung wird vorgeschlagen, dass der Zustand des ersten Servers und/oder des Online-Shops zu regelmäßigen Zeitpunkten ermittelt wird, bspw. alle x Minuten.

Alternativ oder zusätzlich wird vorgeschlagen, dass der Zustand des ersten Servers und/oder des Online-Shops ereignisgesteuert, insbesondere nachdem der Client eine Netzwerkseite angefordert hat, auf der die mindestens eine Information ausgegeben werden kann, ermittelt wird.

Vorzugsweise wird die mindestens eine Information nur dann ausgegeben, falls sich im Rahmen der Ermittlung des Zustands des Online-Shops bzw. des ersten Servers ergibt, dass
- eine dem Online-Shop oder dem Produkt zugeordnete Netzwerkseite als Ziel des Verweises erreichbar ist, und/oder
- ein von dem Online-Shop angebotenes Produkt, das in dem Werbebanner beworben ist und/oder auf das der Hyperlink gerichtet ist, in dem Online-Shop verfügbar ist, und/oder
- eine Anzahl von Betätigungen eines Verweises auf den Online-Shop oder auf das von dem Online-Shop angebotene Produkt plausibel ist, und/oder
- ein Verhältnis einer Anzahl von Betätigungen eines Verweises auf den Online-Shop oder auf das von dem Online-Shop angebotene Produkt zu einer Anzahl tatsächlich verkaufter Produkte plausibel ist.

Schließlich wird vorgeschlagen, dass der Online-Shop, der Werbepartner und/oder das Tracking-System, vorzugsweise per elektronischer Nachricht über das Kommunikations-Netzwerk, informiert werden, falls die mindestens eine Information auf der von dem Client angeforderten Netzwerkseite nicht ausgegeben wird.

Als eine weitere Lösung der Aufgabe der vorliegenden Erfindung wird schließlich ausgehend von dem Server der eingangs genannten Art vorgeschlagen, dass der Server umfasst:
- Prüfmittel zum Ermitteln des Zustands des Online-Shops und/oder eines dem Online-Shop zugeordneten ersten Servers vor der Ausgabe der mindestens einen Information auf der von dem Client angeforderten Netzwerkseite,
- Entscheidungsmittel zum Entscheiden, ob in Abhängigkeit von dem ermittelten Zustand des ersten Servers und/oder des Online-Shops auf der von dem Client angeforderten Netzwerkseite die mindestens eine Information auszugeben ist oder nicht, und
- Ausgabemittel zur Ausgabe der mindestens einen Information auf der von dem Client angeforderten Netzwerkseite in Abhängigkeit von dem Ergebnis der Entscheidung.

Gemäß einer vorteilhaften Weiterbildung der Erfindung wird vorgeschlagen, dass der Server einem Tracking-System zum Beobachten des Abverkaufs von Produkten des Online-Shops zugeordnet ist.

Gemäß einer bevorzugten Ausführungsform wird vorgeschlagen, dass der Server Mittel zur Ausführung des erfindungsgemäßen Verfahrens aufweist. Die Mittel sind vorzugsweise als Software in Form eines Computerprogramms realisiert, das auf einem Rechner des Servers, vorzugsweise auf einem Mikroprozessor, ablauffähig und zur Ausführung des erfindungsgemäßen Verfahrens programmiert ist. Das Computerprogramm kann auf einem Datenträger gespeichert mit diesem zusammen gehandhabt werden. Denkbar ist aber auch, dass das Computerprogramm als solches über das Kommunikationsnetzwerk, bspw. das Internet, übertragen und vertrieben wird. Die vorliegende Erfindung soll sich auch auf das Computerprogramm an sich und auf einen Datenträger mit dem darauf gespeicherten Computerprogramm erstrecken.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. Es zeigen:
- Figur 1: ein erfindungsgemäßes Client-Server-System gemäß einer ersten bevorzugten Ausführungsform;
- Figur 2: ein erfindungsgemäßes Client-Server-System gemäß einer zweiten bevorzugten Ausführungsform;
- Figur 3: ein erfindungsgemäßes Client-Server-System gemäß einer dritten bevorzugten Ausführungsform; und
- Figur 4: ein Ablaufdiagramm eines erfindungsgemäßen Verfahrens gemäß einer bevorzugten Ausführungsform.

Eine Vielzahl von Clients und Servern kann mittels des Internets kommunizieren. Diese bilden in ihrer Gesamtheit ein multimediales Informationssystem, das sogenannte WWW (World Wide Web). Innerhalb des WWW zur Verfügung gestellte Netzwerkseiten sind mittels einer URL (Uniform Ressource Locator) adressierbar. Eine URL ist unter anderem aus dem Namen des die Netzwerkseite zur Verfügung stellenden Servers, einem (zumindest virtuellen) Verzeichnis und einem der Netzwerkseite, beispielsweise dem HTML-Dokument, zugeordneten Namen zusammengesetzt. Eine URL erlaubt es, die dieser URL zugeordnete Netzwerkseite von einem Client aus anzuwählen. Dazu gibt ein Benutzer beispielsweise mittels einer Tastatur die URL in einem speziellen Eingabefeld des Browsers ein. Der Client generiert daraufhin eine Anfrage an den entsprechenden Server, der wiederum die angeforderte Netzwerkseite an den Client übermittelt. Dort wird die übermittelte Netzwerkseite dann beispielsweise mittels eines speziellen Computerprogramms, eines sogenannten Browsers darstellt. Als Browser bezeichnet man ein Computerprogramm, das in der Lage ist, HTML-Dokumente zu interpretieren und mittels einer geeigneten grafischen Oberfläche auf einem Display darzustellen.

Eine URL kann statt eine Netzwerkseite auch einem ausführbaren Computerprogramm auf dem Server zugeordnet sein. Ein derartiges Computerprogramm ist beispielsweise ein sogenanntes perl-script. Ein perl-script ist eine in der Programmiersprache perl codierte Abfolge von Anweisungen. Ruft ein Client eine URL auf, die einem derartigen Computerprogramm zugeordnet ist, so wird dieses Computerprogramm auf dem Server ausgeführt. Die Ausführung des Computerprogramms kann auch eine Übermittlung von Informationen an den Client, beispielsweise in der Form einer Netzwerkseite, vorsehen. Selbstverständlich kann das Computerprogramm auch in einer anderen Sprache, insbesondere in einer anderen Script-Sprache, beispielsweise als java-script, realisiert sein.

In einem HTML-Dokument ist es möglich, URLs weiterer Netzwerkseiten beziehungsweise HTML-Dokumente anzugeben. Derartige URLs werden als Verweis oder als Link bezeichnet. Werden Links mittels eines Browsers einem Benutzer dargestellt, so hat der Benutzer die Möglichkeit, einen dargestellten Link anzuwählen und sich die der angewählten URL entsprechende Netzwerkseite anzeigen zu lassen. Selbstverständlich kann sich die angewählte Netzwerkseite auf einem anderen Server befinden.

Häufig wird von einem ersten Server, beispielsweise von einem Online-Shop 4', ein zweiter Server, beispielsweise ein Werbepartner 5' beauftragt, auf Netzwerkseiten, die von dem Werbepartner 5' an einen diese Netzwerkseite anfordernden Client übermittelt werden, Informationen, die einen Link auf eine Netzwerkseite des Online-Shop 4' umfassen, darzustellen. Ein solcher Link kann beispielsweise ein sogenannter Werbebanner sein, der mittels einer textuellen und/oder grafischen Darstellung für ein über den Online-Shop 4' zu beziehendes Produkt oder eine über den Online-Shop 4' vermittelte Dienstleistung wirbt. Ist der Werbepartner 5' als Suchmaschine ausgestaltet, so kann der Online-Shop 4' den Werbepartner 5' beauftragen, auf einer in Abhängigkeit eines von einem Benutzer eingegebenen Suchwortes (sog. Keyword) erzeugten Netzwerkseite, einen Link auf eine dem Online-Shop 4' zugeordnete Netzwerkseite darzustellen. Typischerweise beauftragt ein Online-Shop 4' mehrere Werbepartner 5' damit, Links auf deren Netzwerkseiten darzustellen.

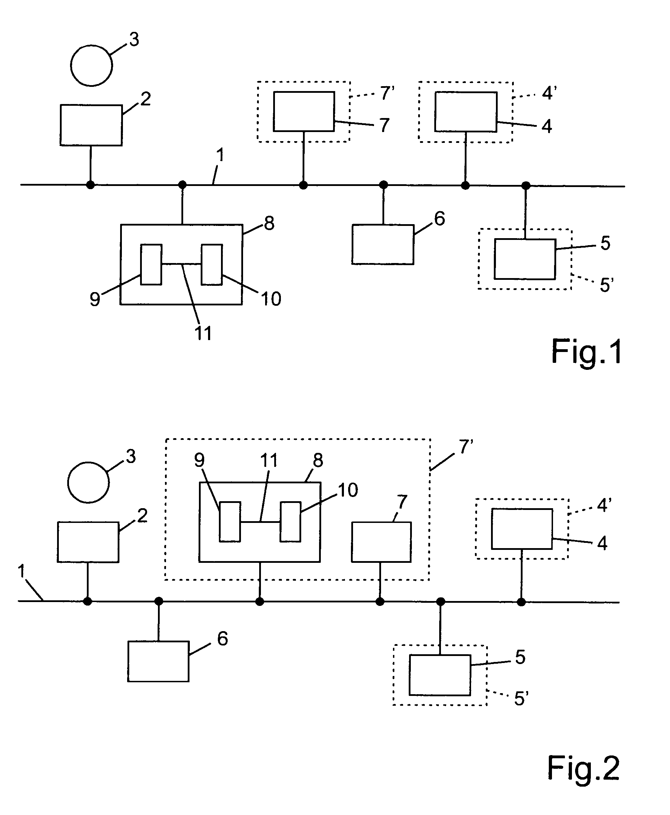

In Figur 1 ist schematisch ein erfindungsgemäßes Client-Server-System dargestellt, das zur Durchführung des erfindungsgemäßen Verfahrens geeignet ist. Es umfasst ein Kommunikationsnetzwerk 1, das bspw. als das Internet ausgebildet ist. An das Kommunikationsnetzwerk 1 ist ein Client 2 angeschlossen, der einem Benutzer 3 zugeordnet ist. Der Client 2 ist beispielsweise als Desktop Computer oder als Laptop ausgestaltet. Der Client 2 kann auch als sogenannter Pocket-Computer (PC, PDA) oder als Mobilfunk-Telefon ausgestaltet sein. Der Client 2 weist in Figur 1 nicht dargestellte Mittel auf, die es dem Benutzer 1 ermöglichen, mit dem Client 2 zu interagieren. Derartige Mittel sind beispielsweise eine Tastatur, ein Display, ein Zeigegerät (beispielsweise eine sogenannte Computermaus) und Lautsprecher.

Außerdem ist an das Kommunikationsnetzwerk 1 ein erster Server 4 eines Online-Shop 4's angeschlossen, bei dem der Benutzer 3 mittels des Clients 2 über das Kommunikationsnetzwerk 1 eines oder mehrere Produkte bestellten kann. Darüber hinaus ist an das Kommunikationsnetzwerk 1 ein zweiter Server 5, der einem Werbepartner 5' zugeordnet ist, und ein dritter Server 6 angeschlossen, auf dem eine Menge von verschiedenen Informationen abgelegt ist. Diese Informationen sind bspw. der Inhalt für Werbebanner für den Online-Shop 4' oder für von dem Online-Shop 4' angebotene Produkte und/oder Links auf Netzwerkseiten des Online-Shop 4's oder der von dem Online-Shop 4' angebotenen Produkte. In Figur 1 ist ferner ein Server 7 eines Tracking-Systems 7' dargestellt, der ebenfalls mit dem Kommunikationsnetzwerk 1 verbunden ist.

Die Werbepartner 5' sind beispielsweise als Suchmaschinen oder als sogenannte Informationsserver ausgestaltet sein, die allgemeine Informationen, beispielsweise Nachrichten, oder themenbezogene Informationen, beispielsweise zu medizinischen Themen, zur Verfügung stellen. Eine Suchmaschine ist ein mit dem Kommunikationsnetzwerk 1 verbundener Server 5, an den der Benutzer 3 mittels des Client 2 eine Anfrage in Form eines Suchbegriffes (sog. Keyword) sendet. Die Suchmaschine ermittelt anhand vorgebbarer Regeln in Abhängigkeit von dem übermittelten Suchbegriff Inhalte von Netzwerkseiten, die mit dem Suchbegriff assoziiert werden. Die Suchmaschine veranlasst, dass die so ermittelten Inhalte als Suchergebnisliste mittels einer Netzwerkseite an den Client 2 übermittelt werden. Dazu wird häufig in Abhängigkeit von den ermittelten Inhalten automatisiert und dynamisch eine Netzwerkseite in Form eines HTML-Dokuments durch den Server 5 erzeugt, das schließlich an den Client 2 übermittelt und dem Benutzer 3 mittels des Browsers angezeigt wird. Häufig werden auf den von den Suchmaschinen erzeugten Netzwerkseiten auch zusätzliche Informationen in Form von Werbebannern und/oder Links dargestellt, wobei die Werbebanner ihrerseits wiederum von Servern spezieller Dienstleister über das Internet 1 zur Verfügung gestellt werden können. Ein solcher Server ist bspw. der dritte Server 6.

Bei dem in Figur 1 dargestellten Client-Server-System ist der Werbepartner 5' dem Tracking-System 7' zugeordnet. Selbstverständlich ist dies nur ein Beispiel für eine mögliche Ausgestaltung des Client-Server-Systems. Es ist durchaus denkbar, dass dem Tracking-System 7' mehrere Werbepartner 5' zugeordnet sind oder dass mehrere Tracking-Systeme 7' mehreren Werbepartnern 5' zugeordnet sind. Die Erfindung betrifft eine beliebige Anzahl von einem Online-Shop 4' zugeordnete Werbepartner 5', die selbst wiederum in beliebigen Konstellationen einer beliebigen Anzahl von Tracking-Systemen 7' zugeordnet sein können. Dabei ist es auch möglich, dass einzelne Werbepartner 5' keinem Tracking-System zugeordnet sind.

Auf dem Client 2 laufen mehrere Computerprogramme ab, die es dem Client 2 ermöglichen, mit anderen Komponenten des Client-Server-Systems, also dem Online-Shop 4', dem Werbepartner 5', dem Tracking-System 7' und dem Server 6, Daten auszutauschen. Eines dieser Programme ist beispielsweise ein Browser, mittels dessen von dem Benutzer 3 über den Client 2 angeforderte Netzwerkseiten dem Benutzer 1 angezeigt werden. Beispielsweise kann der Benutzer 1 mittels des Client 2 von dem Werbepartner 5' eine Netzwerkseite anfordern. Der Werbepartner 5' übermittelt die angeforderte Netzwerkseite an den Client 2. Die Netzwerkseite ist beispielsweise in der Seitenbeschreibungssprache HTML codiert. Empfängt der Client 2 die Netzwerkseite, so wird diese von dem Browser aufbereitet und mittels eines Displays dem Benutzer 3 angezeigt.

Das Client-Server-System aus Figur 1 umfasst darüber hinaus einen weiteren Server 8, der ebenfalls an das Kommunikationsnetzwerk 1 angeschlossen ist. Der Server 8 umfasst ein Rechengerät 9, das bspw. als ein Mikroprozessor ausgebildet ist, und ein Speicherelement 10, das bspw. als ein Flash-Speicher oder als ein Random-Access-Memory (RAM) ausgebildet ist. In dem Speicherelement 10 ist ein Computerprogramm abgelegt, das zur Ausführung des erfindungsgemäßen Verfahrens programmiert ist, wenn es auf dem Rechengerät 9 abläuft. Zum Abarbeiten des Computerprogramms auf dem Rechengerät 9 wird es entweder als ganzes oder abschnittsweise, beispielsweise befehlsweise, über eine Datenverbindung 11 an das Rechengerät 9 übermittelt und dort abgearbeitet. In umgekehrter Richtung können im Rahmen der Abarbeitung des Computerprogramm ermittelte Größen über die Datenverbindung 11 an das Speicherelement 10 übermittelt und dort abgespeichert werden.

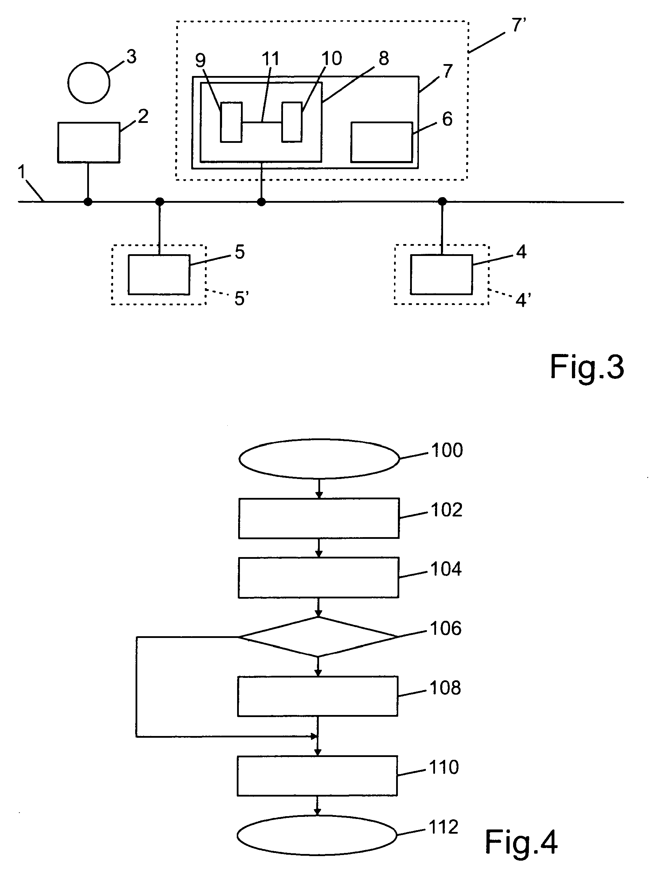

Bei dem in Figur 1 dargestellten Client-Server-System sind der dritte Server 6, der Server 7 des Tracking-Systems 7' und der weitere Server 8 als separate Server ausgebildet, die alle unabhängig voneinander an das Kommunikationsnetzwerk 1 angeschlossen sind. Selbstverständlich ist es auch möglich, dass der dritte Server 6 und/oder der weitere Server 8 dem Tracking-System 7' zugeordnet sind. Es ist sogar denkbar, dass die Funktion des dritten Servers 6 und/oder des weiteren Servers 8 in dem Server 7 des Tracking-Systems 7' ausgeführt wird, das heißt die Server 6, 7, 8 zu einem einzigen Server 7 zusammengefasst sind. Derartige Ausgestaltungen des erfindungsgemäßen Client-Server-Systems sind in den Figuren 2 und 3 beispielhaft dargestellt.

Die Funktionsweise des erfindungsgemäßen Client-Server-Systems bei der Durchführung des erfindungsgemäßen Verfahrens ist beispielhaft in Figur 4 schematisch dargestellt.

Das Verfahren startet in einem Schritt 100. In einem Schritt 102 fordert der Benutzer 3 mittels des Client 2 (beispielsweise durch Eingabe einer URL in ein in dem Browser dafür vorgesehenes Texteingabefeld) eine Netzwerkseite von einem dem Online-Shop 4' zugeordneten Werbepartner 5' an. Ein derartiger Werbepartner 5' kann beispielsweise ein sogenanntes Shopping-Portal sein, das eine Mehrzahl von Links zu verschiedenen Online-Shops 4' zur Verfügung stellt. Dem Benutzer 3 werden - ausgehend von der Startseite des Shopping-Portals - beispielsweise geordnet nach Branchen, ein oder mehrere Links zu einem oder mehreren Online-Shops 4' angezeigt.

Ein Werbepartner 5' kann im weitesten Sinne jeder Anbieter sein, der mittels eines dem Anbieter zugeordneten Servers 5 mindestens eine Netzwerkseite zum Abruf durch einen Client 2 zur Verfügung stellt, wobei die Netzwerkseite mindestens eine Information zu dem Online-Shop 4' oder zu einem von dem Online-Shop 4' angebotenen Produkt aufweist. Diese Information kann bspw. ein Werbebanner mit Werbung für den Online-Shop 4' oder für ein von dem Online-Shop 4' angebotenes Produkt sein. Für das Darstellen der mindestens einen Information auf der Netzwerkseite erhält der Werbepartner 5' üblicherweise eine Vergütung. Diese Vergütung berechnet sich nach der Häufigkeit der Aktivierung des in der Information enthaltenen Links.

Erfindungsgemäß wird ein Verfahren vorgeschlagen, das es ermöglicht, die mindestens eine Information nur dann auf der von dem Benutzer 3 angeforderten Netzwerkseite darzustellen, wenn die Darstellung auch tatsächlich sinnvoll ist. Insbesondere soll die Information nur dann dargestellt werden, wenn
- der erste Server 4 des Online-Shops 4' auch tatsächlich eine Verbindung zum Internet 1 aufweist, und somit über den in der Information enthaltenen Link auch tatsächlich erreichbar ist,
- eine Netzwerkseite des Online-Shops 4', auf die der Link verweist, auch tatsächlich erreichbar ist,
- eine Netzwerkseite des Produkts, auf die der Link verweist, auch tatsächlich erreichbar ist,
- eine Anzahl von Betätigungen des Links auf den Online-Shop 4' oder auf das von dem Online-Shop 4' angebotene Produkt plausibel ist, und/oder
- ein Verhältnis einer Anzahl von Betätigungen eines Verweises auf den Online-Shop 4' oder auf das von dem Online-Shop 4' angebotene Produkt zu einer Anzahl tatsächlich verkaufter Produkte plausibel ist.

Zu diesem Zweck wird in einem Schritt 104 zunächst der Zustand des ersten Servers 4 und/oder des Online-Shops 4' ermittelt. Der Zustand des Servers 4 betrifft auch die Frage, ob derzeit ein Angriff auf den Server 4, bspw. in Form eines Clickbetrugs, auf den Server 4 gefahren wird. Bei einem Clickbetrug wird der auf der Netzwerkseite dargestellte Link mittels eines Scripts häufig wiederholt angeclickt. Der Angriff kann auch aus einer sog. Spyware heraus erfolgen, wobei die Clients von ahnungslosen Benutzern zum Anklicken des Links missbraucht werden. Da jeder der Clients eine andere IP-Adresse aufweist, kann ein solcher Clickbetrug von dem Werbepartner 5' selbst dann nicht erkannt werden, wenn er über die IP-Adresse der den Click auslösenden Clients überprüft. Auf diese Weise kann zwar verhindert werden, dass aus dem gleichen Client heraus mittels des Scripts mehrfach hintereinander der gleiche Link angeclickt wird. Ein Angriff mittels Spyware kann dadurch jedoch nicht verhindert werden. Da bei jedem Click eine Vergütung des Werbepartners 5' fällig wird, kann dem Online-Shop 4' bzw. dem Tracking-System 7' dadurch ein erheblicher Schaden entstehen.

Das Anclicken des Links mehrfach hintereinander kann zu einer Beeinträchtigung der Verfügbarkeit oder sogar zu einer Überlastung des Servers 4 des Online-Shops 4' führen, so dass tatsächlich davon gesprochen werden kann, dass durch einen Clickbetrug der Zustand des Servers 4 beeinflusst wird.

Der Zustand des ersten Servers 4 und/oder des Online-Shops 4' kann bspw. anhand von sogenannten Ping-Befehlen überprüft werden. Dabei wird die grundsätzliche Verfügbarkeit eines Dienstes, bspw. eines Ports des dem Online-Shop 4' zugeordneten ersten Servers 4, überprüft. Zusätzlich können weitere Kenngrößen des ersten Servers 4 bzw. des Online-Shops 4' überprüft werden, z.B. ob die Netzwerkseiten des Online-Shops 4' bzw. des Produkts, zu denen der in der Information enthaltene Link hinführt, tatsächlich wie gewünscht erreichbar sind, oder ob stattdessen Wartungsseiten ausgegeben werden oder das gewünschte Produkt in dem Online-Shop 4' nicht verfügbar ist. Zu diesem Zweck kann ein oder können mehrere Merkmale des Online-Shops 4' festgelegt oder ausgewählt werden, z.B. mehrere verschiedene Produkte bzw. Artikelnummern. Die Verfügbarkeit dieser Merkmale kann zum Überprüfen des Zustands des ersten Servers 4 und/oder des Online-Shops 4' hergezogen werden.

Ebenso ist es möglich, den Zustand des ersten Servers 4 und/oder des Online-Shops 4' mittels einer Plausibilitätsprüfung bestimmter Kenngrößen zu ermitteln. So ist es bspw. denkbar, dass man die generierten Clicks (Aktivierungen eines Links) und Leads (Registrierungen ohne greifbaren Umsatz) innerhalb eines vorgebbaren Zeitraums in ein Verhältnis zu den Sales (tatsächlich erfolgte Bestellungen) setzt. Dies kann bspw. mit Hilfe des Tracking-Systems 7' gemacht werden. Auf diese Weise kann ohne großen Aufwand erkannt werden, dass bei einer großen Anzahl von Clicks (z.B. 10.0000 generierten Clicks) auf den gleichen Link und keinen Sales oder Leads umfangreiche Probleme bestehen müssen. Die Aussage, dass ein Problem vorliegen muss, reicht für die Realisierung der Erfindung völlig aus. Unerheblich für die Realisierung der Erfindung ist es, wo genau ein Problem aufgetreten ist bzw. welcher Art das Problem ist.

Des weiteren ist es mit der vorliegenden Erfindung möglich, Betrugsversuche bei dem Werbepartner 5', welche Auswirkungen auf den Server 4 des Online-Shops 4' haben, z.B. einen sogenannten Clickbetrug, zu erkennen und entsprechende Gegenmaßnahmen einzuleiten. Clickbetrug kann mit der vorliegenden Erfindung dadurch verhindert werden, dass bspw. die sogenannte Conversion (Verhältnis Clicks zu Sales) beobachtet wird oder die absolute Anzahl an Clicks für bestimmte Suchworte (Keywords) beobachtet wird. Von einem Clickbetrug kann ausgegangen werden, wenn die Conversion sehr hoch ist oder innerhalb kurzer Zeit stark ansteigt. Ebenso kann von einem Clickbetrug ausgegangen werden, wenn die absolute Anzahl der Clicks für normalerweise weniger beachtete Suchworte (Keywords) innerhalb kurzer Zeit stark ansteigt.

In einem Schritt 106 wird in Abhängigkeit von dem in Schritt 104 ermittelten Zustand des ersten Servers 4 und/oder des Online-Shops 4' entschieden, ob auf der von dem Client 2 angeforderten Netzwerkseite die vorgesehene mindestens eine Information sinnvoller weise ausgegeben werden soll oder nicht. Wenn sich im Schritt 104 bspw. ergibt, dass der erste Server 4 derzeit nicht erreichbar ist, macht eine Ausgabe der Information mit dem Link auf eine Netzwerkseite des Servers 4 keinen Sinn. Wenn sich im Schritt 104 bspw. ergibt, dass eine Netzwerkseite des Servers 4, auf die der in der Information enthaltene Link verweist, derzeit nicht verfügbar ist, macht eine Ausgabe der Information mit dem Link auf diese Netzwerkseite ebenfalls keinen Sinn. Ebenso macht eine Ausgabe der Information auf der von dem Client 2 angeforderten Netzwerkseite keinen Sinn, wenn ein Produkt in dem Online-Shop 4' nicht verfügbar ist, das durch einen in der Information enthaltenen Werbebanner beworben wird oder auf dessen Netzwerkseite ein in der Information enthaltener Link verweist. Schließlich sollte auf eine Darstellung der Information auf der angeforderten Netzwerkseite auch verzichtet werden, wenn Angriffe auf die Information bzw. auf den darin enthalten Link erkannt werden.

Falls in Schritt 106 entschieden wird, die Information auf der von dem Client 2 angeforderten Netzwerkseite darzustellen, wird in einem Schritt 108 die Information in die darzustellende Netzwerkseite eingebaut. Anschließend wird in einem Schritt 110 die Netzwerkseite zusammen mit der Information über das Kommunikationsnetzwerk 1 an den Client 2 übermittelt und bspw. mittels eines Browsers an den Benutzer 3 ausgegeben. Falls in Schritt 106 entschieden wird, die Information auf der von dem Client 2 angeforderten Netzwerkseite nicht darzustellen, wird der Schritt 108 übersprungen und gleich zu Schritt 110 zur Ausgabe der Netzwerkseite ohne die Information verzweigt. In einem Schritt 112 ist das erfindungsgemäße Verfahren beendet.

Das Ablaufdiagramm in Figur 4 zeigt ein Ausführungsbeispiel der Erfindung, bei dem die Überprüfung des Zustands des ersten Servers 4 bzw. des Online-Shops 4' ereignisgesteuert, das heißt ausgelöst durch einen Aufruf der Netzwerkseite durch den Client 2, ausgeführt wird. Es wäre selbstverständlich auch denkbar, die Überprüfung in regelmäßigen zeitlichen Abständen durchzuführen und dann, falls von dem Client 2 eine Netzwerkseite angefordert wird, auf das Ergebnis der letzten Überprüfung zurückzugreifen.

## Patentansprüche

1. Client-Server-System umfassend:
- ein Kommunikationsnetzwerk (1),
- einen an das Kommunikationsnetzwerk (1) angeschlossenen Client (2),
- einen an das Kommunikationsnetzwerk (1) angeschlossenen ersten Server (4), der einem Online-Shop (4') zugeordnet ist,
- einen an das Kommunikationsnetzwerk (1) angeschlossenen zweiten Server (5), der einem Werbepartner (5') zugeordnet ist,
- einen an das Kommunikationsnetzwerk (1) angeschlossenen dritten Server (6), auf dem eine mindestens eine Information umfassende Menge von Informationen abgelegt ist, die dem Online-Shop (4') und/oder einem von dem Online-Shop (4') angebotenen Produkt zugeordnet sind,
- wobei der Client (2) Mittel zum Anfordern einer dem Werbepartner (5') zugeordneten Netzwerkseite über das Kommunikationsnetzwerk (1) aufweist,
**dadurch gekennzeichnet, dass**
- in dem Client-Server-System Prüfmittel vorgesehen sind, um vor der Ausgabe der mindestens einen Information auf der von dem Client (2) angeforderten Netzwerkseite den Zustand des ersten Servers (4) und/oder des Online-Shops (4') zu ermitteln,
- in dem Client-Server-System Entscheidungsmittel vorgesehen sind, um zu entscheiden, ob in Abhängigkeit von dem ermittelten Zustand des ersten Servers (4) und/oder des Online-Shops (4') auf der von dem Client (2) angeforderten Netzwerkseite mindestens eine Information aus der Menge der Informationen auszugeben ist oder nicht, und
- in dem Client-Server-System Ausgabemittel vorgesehen sind, um in Abhängigkeit von dem Ergebnis der Entscheidung die mindestens eine Information aus der Menge der Informationen auf der von dem Client (2) angeforderten Netzwerkseite auszugeben.

2. Client-Server-System nach Anspruch 1, **dadurch gekennzeichnet, dass** das Kommunikationsnetzwerk (1) das Internet ist.

3. Client-Server-System nach Anspruch 1 oder 2, **dadurch gekennzeichnet, dass** der dritte Server (6) einem Tracking-System (7') zum Beobachten des Abverkaufs von Produkten des Online-Shops (4') zugeordnet ist.

4. Client-Server-System nach Anspruch 3, **dadurch gekennzeichnet, dass** die Prüfmittel zum Ermitteln des Zustands des ersten Servers (4) und/oder des daran angeschlossenen Online-Shops (4') in dem Tracking-System (7') angeordnet sind.

5. Client-Server-System nach Anspruch 3 oder 4, **dadurch gekennzeichnet, dass** die Entscheidungsmittel zum Entscheiden ob die mindestens eine Information auf der angeforderten Netzwerkseite auszugeben ist oder nicht in dem Tracking-System (7') angeordnet sind.

6. Client-Server-System nach einem der Ansprüche 3 bis 5, **dadurch gekennzeichnet, dass** die Ausgabemittel zur Ausgabe der mindestens einen Information auf der angeforderten Netzwerkseite in dem Tracking-System (7') angeordnet sind.

7. Client-Server-System nach einem der Ansprüche 1 bis 6, **dadurch gekennzeichnet, dass** die mindestens eine Information eine Werbung für den Online-Shop (4') oder für das von dem Online-Shop (4') angebotene Produkt umfasst.

8. Client-Server-System nach einem der Ansprüche 1 bis 7, **dadurch gekennzeichnet, dass** die mindestens eine Information einen Verweis auf eine dem Online-Shop (4') oder dem von dem Online-Shop (4') angebotenen Produkt zugeordnete Netzwerkseite umfasst.

9. Verfahren zur Ausgabe mindestens einer Information zu einem Online-Shop (4') oder zu einem von dem Online-Shop (4') angebotenen Produkt auf einer von einem Client (2) angeforderten, einem Werbepartner (5') zugeordneten Netzwerkseite, wobei
- der Client (2) an ein Kommunikationsnetzwerk (1) angeschlossen ist,
- an das Kommunikationsnetzwerk (1) ein erster Server (4) angeschlossen ist, der dem Online-Shop (4') zugeordnet ist,
- an das Kommunikationsnetzwerk (1) ein zweiter Server (5) angeschlossen ist, der dem Werbepartner (5') zugeordnet ist,
- an das Kommunikationsnetzwerk (1) ein dritter Server (6) angeschlossen ist, auf dem eine die mindestens eine Information umfassende Menge von Informationen zu dem Online-Shop (4') oder zu einem von dem Online-Shop (4') angebotenen Produkt abgelegt sind, und
- der Client (2) die dem Werbepartner (5') zugeordnete Netzwerkseite über das Kommunikationsnetzwerk (1) anfordert,
**dadurch gekennzeichnet, dass**
- vor der Ausgabe der mindestens einen Information auf der von dem Client (2) angeforderten Netzwerkseite der Zustand des ersten Servers (4) und/oder des Online-Shops (4') ermittelt wird,
- entschieden wird, ob in Abhängigkeit von dem ermittelten Zustand des ersten Servers (4) und/oder des Online-Shops (4') die mindestens eine Information aus der Menge der Informationen auf der von dem Client (2) angeforderten Netzwerkseite ausgegeben wird oder nicht, und
- in Abhängigkeit von dem Ergebnis der Entscheidung die mindestens eine Information aus der Menge der Informationen auf der von dem Client (2) angeforderten Netzwerkseite ausgegeben wird.

10. Verfahren Anspruch 9, **dadurch gekennzeichnet, dass** als die mindestens eine Information eine Werbung für den Online-Shop (4') oder für das von dem Online-Shop (4') angebotene Produkt ausgegeben wird.

11. Verfahren Anspruch 9 oder 10, **dadurch gekennzeichnet, dass** als die mindestens eine Information ein Verweis auf eine dem Online-Shop (4') oder dem von dem Online-Shop (4') angebotenen Produkt zugeordnete Netzwerkseite ausgegeben wird.

12. Verfahren nach einem der Ansprüche 9 bis 11, **dadurch gekennzeichnet, dass** der Zustand des ersten Servers (4) und/oder des Online-Shops (4') zu regelmäßigen Zeitpunkten ermittelt wird.

13. Verfahren nach einem der Ansprüche 9 bis 11, **dadurch gekennzeichnet, dass** der Zustand des ersten Servers (4) und/oder des Online-Shops (4') ereignisgesteuert, insbesondere nachdem der Client (2) eine Netzwerkseite angefordert hat, auf der die mindestens eine Information ausgegeben werden kann, ermittelt wird.

14. Verfahren nach einem der Ansprüche 9 bis 13, **dadurch gekennzeichnet, dass** die mindestens eine Information nur dann ausgegeben wird, falls sich im Rahmen der Ermittlung des Zustands des Online-Shops (4') bzw. des ersten Servers (4) ergibt, dass
- eine dem Online-Shop (4') oder dem Produkt zugeordnete Netzwerkseite als Ziel des Verweises erreichbar ist, und/oder
- ein von dem Online-Shop (4') angebotenes Produkt, das in dem Werbebanner beworben ist und/oder auf das der Verweis gerichtet ist, in dem Online-Shop (4') verfügbar ist, und/oder
- eine Anzahl von Betätigungen eines Verweises auf den Online-Shop (4') oder auf das von dem Online-Shop (4') angebotene Produkt plausibel ist, und/oder
- ein Verhältnis einer Anzahl von Betätigungen eines Verweises auf den Online-Shop (4') oder auf das von dem Online-Shop (4') angebotene Produkt zu einer Anzahl tatsächlich verkaufter Produkte plausibel ist.

15. Verfahren nach einem der Ansprüche 9 bis 14, **dadurch gekennzeichnet, dass** der Online-Shop (4'), der Werbepartner (5') und/oder das Tracking-System (7'), vorzugsweise per elektronischer Nachricht über das Kommunikations-Netzwerk (1), informiert werden, falls die mindestens eine Information auf der von dem Client (2) angeforderten Netzwerkseite nicht ausgegeben wird.

16. Server (6) eines Client-Server-Systems zur Ausgabe mindestens einer Information betreffend einen Online-Shop (4') oder ein von dem Online-Shop (4') angebotenes Produkt auf einer einem Werbepartner (5') zugeordneten und von einem Client (2) angeforderten Netzwerkseite, **dadurch gekennzeichnet, dass** der Server (6) umfasst:
- Prüfmittel zum Ermitteln des Zustands des Online-Shops (4') und/oder eines dem Online-Shop (4') zugeordneten ersten Servers (4) vor der Ausgabe der mindestens einen Information auf der von dem Client (2) angeforderten Netzwerkseite,
- Entscheidungsmittel zum Entscheiden, ob in Abhängigkeit von dem ermittelten Zustand des ersten Servers (4) und/oder des Online-Shops (4') auf der von dem Client (2) angeforderten Netzwerkseite die mindestens eine Information auszugeben ist oder nicht, und
- Ausgabemittel zur Ausgabe der mindestens einen Information auf der von dem Client (2) angeforderten Netzwerkseite in Abhängigkeit von dem Ergebnis der Entscheidung.

17. Server (6) nach Anspruch 16, **dadurch gekennzeichnet, dass** der Server (6) einem Tracking-System (7') zum Beobachten des Abverkaufs von Produkten des Online-Shops (4') zugeordnet ist.

18. Server (6) nach Anspruch 16 oder 17, **dadurch gekennzeichnet, dass** der Server (6) Mittel zur Ausführung eines Verfahrens nach einem der Ansprüche 10 bis 15 aufweist.

## Geänderte Patentansprüche

### Geänderte Patentansprüche gemäss Regel 86(2) EPÜ.

**1.** Client-Server-System umfassend:
- ein Kommunikationsnetzwerk (1),
- einen an das Kommunikationsnetzwerk (1) angeschlossenen Client (2),
- einen an das Kommunikationsnetzwerk (1) angeschlossenen ersten Server (4),
- einen an das Kommunikationsnetzwerk (1) angeschlossenen zweiten Server (5),
- einen an das Kommunikationsnetzwerk (1) angeschlossenen dritten Server (6), auf dem eine mindestens eine Information umfassende Menge von Informationen abgelegt ist,
- der Client (2) Mittel zum Anfordern einer Netzwerkseite über das Kommunikationsnetzwerk (1) aufweist,
- in dem Client-Server-System Prüfmittel vorgesehen sind, um vor der Ausgabe der mindestens einen Information auf der von dem Client (2) angeforderten Netzwerkseite den Zustand des ersten Servers (4) zu ermitteln,
- in dem Client-Server-System Entscheidungsmittel vorgesehen sind, um zu entscheiden, ob in Abhängigkeit von dem ermittelten Zustand des ersten Servers (4) auf der von dem Client (2) angeforderten Netzwerkseite mindestens eine Information aus der Menge der Informationen auszugeben ist oder nicht, und
- in dem Client-Server-System Ausgabemittel vorgesehen sind, um in Abhängigkeit von dem Ergebnis der Entscheidung die mindestens eine Information aus der Menge der Informationen auf der von dem Client (2) angeforderten Netzwerkseite auszugeben,
**dadurch gekennzeichnet, dass**
- der erste Server (4) einem Online-Shop (4') zugeordnet ist,
- der zweite Server (5) einem Werbepartner (5') zugeordnet ist,
- der dritte Server (6) einem Tracking-System (7') zum Beobachten des Abverkaufs von Produkten des Online-Shops (4') zugeordnet ist,
- die mindestens eine Information umfassende Menge von Informationen dem Online-Shop (4') und/oder einem von dem Online-Shop (4') angebotenen Produkt zugeordnet sind,
- die von dem Client (2) anforderte Netzwerkseite dem Werbepartner (5') zugeordnet ist, und
- die Prüfmittel zur Ermittlung des Zustands des ersten Servers (4) die über die angeforderte Netzwerkseite generierten Clicks und Leads innerhalb einer vorgebbaren Zeit in ein Verhältnis zu den erzielten Abverkäufen von Produkten des Online-Shops (4') setzen.

**2.** Client-Server-System nach Anspruch 1, **dadurch gekennzeichnet, dass** das Kommunikationsnetzwerk (1) das Internet ist.

**3.** Client-Server-System nach Anspruch 1 oder 2, **dadurch gekennzeichnet, dass** die Prüfmittel zum Ermitteln des Zustands des ersten Servers (4) und/oder des daran angeschlossenen Online-Shops (4') in dem Tracking-System (7') angeordnet sind.

**4.** Client-Server-System nach der Ansprüche 1 bis 3, **dadurch gekennzeichnet, dass** die Entscheidungsmittel zum Entscheiden ob die mindestens eine Information auf der angeforderten Netzwerkseite auszugeben ist oder nicht in dem Tracking-System (7') angeordnet sind.

**5.** Client-Server-System nach einem der Ansprüche 1 bis 4, **dadurch gekennzeichnet, dass** die Ausgabemittel zur Ausgabe der mindestens einen Information auf der angeforderten Netzwerkseite in dem Tracking-System (7') angeordnet sind.

**6.** Client-Server-System nach einem der Ansprüche 1 bis 5, **dadurch gekennzeichnet, dass** die mindestens eine Information eine Werbung für den Online-Shop (4') oder für das von dem Online-Shop (4') angebotene Produkt umfasst.

**7.** Client-Server-System nach einem der Ansprüche 1 bis 6, **dadurch gekennzeichnet, dass** die mindestens eine Information einen Verweis auf eine dem Online-Shop (4') oder dem von dem Online-Shop (4') angebotenen Produkt zugeordnete Netzwerkseite umfasst.

**8.** Verfahren zur Ausgabe mindestens einer Information auf einer von einem Client (2) angeforderten Netzwerkseite, wobei
- der Client (2) an ein Kommunikationsnetzwerk (1) angeschlossen ist,
- an das Kommunikationsnetzwerk (1) ein erster Server (4) angeschlossen ist,
- an das Kommunikationsnetzwerk (1) ein zweiter Server (5) angeschlossen ist,
- an das Kommunikationsnetzwerk (1) ein dritter Server (6) angeschlossen ist, auf dem eine die mindestens eine Information umfassende Menge von Informationen abgelegt ist,
- der Client (2) die Netzwerkseite über das Kommunikationsnetzwerk (1) anfordert,
- vor der Ausgabe der mindestens einen Information auf der von dem Client (2) angeforderten Netzwerkseite der Zustand des ersten Servers (4) ermittelt wird,
- entschieden wird, ob in Abhängigkeit von dem ermittelten Zustand des ersten Servers (4) die mindestens eine Information aus der Menge der Informationen auf der von dem Client (2) angeforderten Netzwerkseite ausgegeben wird oder nicht, und
- in Abhängigkeit von dem Ergebnis der Entscheidung die mindestens eine Information aus der Menge der Informationen auf der von dem Client (2) angeforderten Netzwerkseite ausgegeben wird,
**dadurch gekennzeichnet, dass**
- der erste Server (4) einem Online-Shop (4') zugeordnet ist,
- der zweite Server (5) einem Werbepartner (5') zugeordnet ist,
- der dritte Server (6) einem Tracking-System (7') zum Beobachten des Abverkaufs von Produkten des Online-Shops (4') zugeordnet ist,
- die mindestens eine Information umfassende Menge von Informationen dem Online-Shop (4') und/oder einem von dem Online-Shop (4') angebotenen Produkt zugeordnet sind,
- die von dem Client (2) anforderte Netzwerkseite dem Werbepartner (5') zugeordnet ist, und
- zur Ermittlung des Zustands des ersten Servers (4) die über die angeforderte Netzwerkseite generierten Clicks und Leads innerhalb einer vorgebbaren Zeit in ein Verhältnis zu den erzielten Abverkäufen von Produkten des Online-Shops (4') gesetzt werden.

**9.** Verfahren Anspruch 8, **dadurch gekennzeichnet, dass** als die mindestens eine Information eine Werbung für den Online-Shop (4') oder für das von dem Online-Shop (4') angebotene Produkt ausgegeben wird.

**10.** Verfahren Anspruch 8 oder 9, **dadurch gekennzeichnet, dass** als die mindestens eine Information ein Verweis auf eine dem Online-Shop (4') oder dem von dem Online-Shop (4') angebotenen Produkt zugeordnete Netzwerkseite ausgegeben wird.

**11.** Verfahren nach einem der Ansprüche 8 bis 10, **dadurch gekennzeichnet, dass** der Zustand des ersten Servers (4) und/oder des Online-Shops (4') zu regelmäßigen Zeitpunkten ermittelt wird.

**12.** Verfahren nach einem der Ansprüche 8 bis 10, **dadurch gekennzeichnet, dass** der Zustand des ersten Servers (4) und/oder des Online-Shops (4') ereignisgesteuert, insbesondere nachdem der Client (2) eine Netzwerkseite angefordert hat, auf der die mindestens eine Information ausgegeben werden kann, ermittelt wird.

**13.** Verfahren nach einem der Ansprüche 8 bis 12, **dadurch gekennzeichnet, dass** die mindestens eine Information nur dann ausgegeben wird, falls sich im Rahmen der Ermittlung des Zustands des Online-Shops (4') bzw. des ersten Servers (4) ergibt, dass
- eine dem Online-Shop (4') oder dem Produkt zugeordnete Netzwerkseite als Ziel des Verweises erreichbar ist, und/oder
- ein von dem Online-Shop (4') angebotenes Produkt, das in dem Werbebanner beworben ist und/oder auf das der Verweis gerichtet ist, in dem Online-Shop (4') verfügbar ist, und/oder
- eine Anzahl von Betätigungen eines Verweises auf den Online-Shop (4') oder auf das von dem Online-Shop (4') angebotene Produkt plausibel ist, und/oder
- ein Verhältnis einer Anzahl von Betätigungen eines Verweises auf den Online-Shop (4') oder auf das von dem Online-Shop (4') angebotene Produkt zu einer Anzahl tatsächlich verkaufter Produkte plausibel ist.

**14.** Verfahren nach einem der Ansprüche 8 bis 13, **dadurch gekennzeichnet, dass** der Online-Shop (4'), der Werbepartner (5') und/oder das Tracking-System (7'), vorzugsweise per elektronischer Nachricht über das Kommunikations-Netzwerk (1), informiert werden, falls die mindestens eine Information auf der von dem Client (2) angeforderten Netzwerkseite nicht ausgegeben wird.

**15.** Server (6) eines Client-Server-Systems zur Ausgabe mindestens einer Information auf einer von einem Client (2) angeforderten Netzwerkseite, wobei der Server (6) umfasst:
- Prüfmittel zum Ermitteln des Zustands eines ersten Servers (4) vor der Ausgabe der mindestens einen Information auf der von dem Client (2) angeforderten Netzwerkseite,
- Entscheidungsmittel zum Entscheiden, ob in Abhängigkeit von dem ermittelten Zustand des ersten Servers (4) auf der von dem Client (2) angeforderten Netzwerkseite die mindestens eine Information auszugeben ist oder nicht, und
- Ausgabemittel zur Ausgabe der mindestens einen Information auf der von dem Client (2) angeforderten Netzwerkseite in Abhängigkeit von dem Ergebnis der Entscheidung, **dadurch gekennzeichnet, dass**
- der erste Server (4) einem Online-Shop (4') zugeordnet ist,
- der zweite Server (5) einem Werbepartner (5') zugeordnet ist,
- der dritte Server (6) einem Tracking-System (7') zum Beobachten des Abverkaufs von Produkten des Online-Shops (4') zugeordnet ist,
- die Information den Online-Shop (4') oder ein von dem Online-Shop (4') angebotenes Produkt betrifft,
- die angeforderte Netzwerkseite dem Werbepartner (5') zugeordnet ist, und
- die Prüfmittel zur Ermittlung des Zustands des ersten Servers (4) die über die angeforderte Netzwerkseite innerhalb einer vorgebbaren Zeit generierten Clicks und Leads in eine Verhältnis zu den erzielten Abverkäufen von Produkten des Online-Shops (4') setzen.

**16.** Server (6) nach Anspruch 15, **dadurch gekennzeichnet, dass** der Server (6) Mittel zur Ausführung eines Verfahrens nach einem der Ansprüche 9 bis 14 aufweist.
